# EUROPEAN PATENT APPLICATION

(11) **EP 4 683 381 A1**
(43) Date of publication of application: **21.01.2026**
(21) Application number: 24791983.0
(22) Date of filing: 16.04.2024
(51) Int. Cl.: H04W 28/18

(54) **COMMUNICATION METHOD AND APPARATUS**

(30) Priority: 17.04.2023 CN 202310458686
(71) Applicant: Huawei Technologies Co., Ltd., Shenzhen, Guangdong 518129 (CN)
(72) Inventor: LIU, Chenchen, Shenzhen, Guangdong 518129 (CN); HUANG, Lei, Shenzhen, Guangdong 518129 (CN); QIAN, Bin, Shenzhen, Guangdong 518129 (CN); YANG, Xun, Shenzhen, Guangdong 518129 (CN)
(74) Representative: Huawei European IPR
(86) International application number: PCT/CN2024/087950
(87) International publication number: WO 2024/217398

(57) **Abstract**

A communication method and apparatus are provided, and relate to the field of communication technologies. The method includes: A format of a PPDU that may be sent by a first UWB device to a second UWB device is determined based on a device type of the first UWB device and a type of the second UWB device, and the type of the second UWB device is indicated by first indication information. This indicates that the corresponding PPDU format may be determined between the first UWB device and the second UWB device without a complex interaction process. In other words, this simplifies an interaction procedure for negotiating a PPDU structure, thereby reducing a communication delay.

## Description

This application claims priority to Chinese Patent Application No. 202310458686.8, filed with the China National Intellectual Property Administration on April 17, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An ultra-wideband (ultra-wideband, UWB) is a wireless carrier communication technology in which a nanosecond-level non-sinusoidal narrow impulse is used for data transmission. Therefore, the ultra-wideband occupies a wide spectrum range. Due to a narrow impulse and extremely low radiation spectral density of the ultra-wideband, a UWB system has advantages such as a strong multipath resolution capability, low power consumption, and high confidentiality.

Generally, different physical headers (physical headers, PHRs) have different physical layer protocol data unit (physical layer protocol data unit, PPDU) structures. To correctly decode a PPDU, different UWB devices need to negotiate a to-be-used PPDU structure in advance before communication. However, an interaction process in this negotiation manner is complex, resulting in a large communication delay.

### SUMMARY

This application provides a communication method and apparatus, to simplify an interaction procedure of negotiating a PPDU structure, thereby reducing a communication delay.

According to a first aspect, a communication method is provided. The method is applied to a first UWB device, and the method includes: receiving first indication information from a second UWB device, where the first indication information indicates a device type of the second UWB device; and sending a first PPDU to the second UWB device, where a format of the first PPDU is determined based on a device type of the first UWB device and the type of the second UWB device.

In the foregoing embodiment, the format of the PPDU sent by the first UWB device to the second UWB device is determined based on the device type of the first UWB device and the type of the second UWB device, and the type of the second UWB device is indicated by the first indication information. This indicates that the format of the PPDU sent by the first UWB device to the second UWB device may be determined between the first UWB device and the second UWB device without a complex interaction process. In other words, this simplifies an interaction procedure for negotiating a PPDU structure, thereby reducing a communication delay.

The device type of the first UWB device or the device type of the second UWB device includes at least one of the following: a ranging device, a sensing device, and a data transmission device. The ranging device may include a general ranging device and/or an advanced ranging device, where the general ranging device does not support a dynamic physical header (physical header, PHR) and low-density parity-check (low-density parity-check, LDPC) coding, and the advanced ranging device supports the dynamic PHR and the LDPC coding. The sensing device may include a general sensing device and/or an advanced sensing device, where the general sensing device does not support a dynamic PHR and LDPC coding, and the advanced sensing device supports the dynamic PHR and the LDPC coding. The data transmission device may include a general data transmission device and/or an advanced data transmission device, where the general data transmission device does not support a dynamic PHR and LDPC coding, and the advanced data transmission device supports the dynamic PHR and the LDPC coding.

With reference to the first aspect, in a possible implementation, when the first UWB device and the second UWB device are of a device type that supports the dynamic PHR, the format of the first PPDU is a first format, and the PPDU in the first format includes two PHRs; or when the first UWB device and/or the second UWB device are/is of a device type that does not support the dynamic PHR, the format of the first PPDU is a second format, and the PPDU in the second format includes one PHR.

It should be noted that the PHR mentioned in this application may also be referred to as a physical header or a physical layer header. This is not limited.

With reference to the first aspect, in a possible implementation, when the format of the first PPDU is the first format, the method further includes: An upper layer of the first UWB device sends a first primitive to a physical layer (physical layer, PHY) of the first UWB device, where the first primitive indicates a rate and a modulation and coding scheme that are used by a PHR in the first PPDU and a rate and a modulation and coding scheme that are used by a physical payload in the first PPDU, and the PHR in the first PPDU indicates a length of the physical payload in the first PPDU; and the physical layer of the first UWB device generates the first PPDU based on the rate and the modulation and coding scheme that are indicated by the first primitive.

In the foregoing embodiment, when the format of the first PPDU is the first format, the upper layer of the first UWB device may indicate, to the physical layer of the first UWB device by using the first primitive, the rate and the modulation and coding scheme that are used by the PHR in the first PPDU and the rate and the modulation and coding scheme that are used by the physical payload in the first PPDU. In this way, the physical layer of the first UWB device can generate the first PPDU that meets an upper-layer requirement, to ensure that the second UWB device can correctly decode the first PPDU.

In a possible implementation, the upper layer of the first UWB device may be a medium access control (medium access control, MAC) layer.

The first primitive may be, for example, a MAC common part sublayer data transmission primitive (MAC common part sublayer-data request primitive, MCPS-DATA.request primitive).

With reference to the first aspect, in a possible implementation, the first primitive includes a first data rate field, the first data rate field indicates a first index, the first index is associated with first information, and the first information indicates at least one of the following: the first UWB device determining to use the dynamic PHR, a constraint length of convolutional code used by the first UWB device, whether the first UWB device supports the LDPC, the rate of the PHR in the first PPDU, and the rate of the physical payload in the first PPDU.

In the foregoing embodiment, the first index may be indicated by the first data rate field in the first primitive. This reduces indication overheads. In addition, the first index is associated with the first information, so that the physical layer of the first UWB device can determine, based on the first information associated with the first index, the rate and the modulation and coding scheme that used by the PHR in the first PPDU and the rate and the modulation and coding scheme that used by the physical payload in the first PPDU.

With reference to the first aspect, in a possible implementation, the first primitive includes a second data rate field and a code field, the second data rate field indicates the rate of the physical payload in the first PPDU, and the code field indicates a constraint length of convolutional code used by the first UWB device and/or whether the first UWB device supports the LDPC.

With reference to the first aspect, in a possible implementation, when the format of the first PPDU is the second format, a rate and a modulation and coding scheme that are used by a PHR in the first PPDU and a rate and a modulation and coding scheme that are used by a physical payload in the first PPDU are determined based on at least one of a data rate type, the LDPC, and a constraint length of convolutional code that are determined by the first UWB device.

In the foregoing embodiment, when the format of the first PPDU is the second format, a rate and a modulation and coding scheme that are used by a PHR in the first PPDU and a rate and a modulation and coding scheme that are used by a physical payload in the first PPDU may be determined based on at least one of a data rate type, the LDPC, and a constraint length of convolutional code that are determined by the first UWB device. This indicates that when the dynamic PHR is not supported, the UWB device may be supported to use more rates and modulation and coding schemes.

According to a second aspect, a communication method is provided. The method is applied to a second ultra-wideband UWB device, and the method includes: sending first indication information to a first UWB device, where the first indication information indicates a device type of the second UWB device; and receiving a first PPDU from the first UWB device, where a format of the first PPDU is determined based on a device type of the first UWB device and the type of the second UWB device.

According to a third aspect, a communication apparatus is provided, including units or modules configured to implement the method in either the first aspect or the second aspect.

According to a fourth aspect, a communication apparatus is provided. The communication apparatus includes at least one processor and a memory. The memory is configured to store a computer program or instructions. The at least one processor is configured to execute the computer program or the instructions in the memory, so that the method in either the first aspect or the second aspect is performed.

According to a fifth aspect, a communication system is provided. The communication system includes a first UWB device and a second UWB device. The first UWB device is configured to perform the method in any one of the implementations of the first aspect. The second UWB device is configured to perform the method in any one of the implementations of the second aspect.

According to a sixth aspect, a computer-readable storage medium is provided. The computer-readable storage medium stores computer instructions. When the computer instructions are executed, a computer is enabled to perform the method in either the first aspect or the second aspect.

According to a seventh aspect, a computer program product is provided. The computer program product includes computer program code. When the computer program code is run by a computer, the computer is enabled to perform the method in either the first aspect or the second aspect.

According to an eighth aspect, a chip is provided. The chip includes at least one processor and an interface. The processor is configured to read and execute instructions stored in a memory. When the instructions are run, the chip is enabled to perform the method in either the first aspect or the second aspect.

For technical effect that can be achieved in any one of the second aspect to the eighth aspect and the possible implementations of the second aspect to the eighth aspect, refer to the technical effect that can be achieved in any one of the first aspect and the possible implementations of the first aspect. Details are not described herein again.

### BRIEF DESCRIPTION OF DRAWINGS

FIG. 1 is a diagram of a structure of a wireless communication system according to an embodiment of this application;
FIG. 2 shows an example of a system architecture shown in FIG. 1;
FIG. 3 is a schematic flowchart of a communication method according to an embodiment of this application;
FIG. 4 is a diagram of device classification according to an embodiment of this application;
FIG. 5 is a diagram of a device type field according to an embodiment of this application;
FIG. 6 is a diagram of a structure of a PPDU according to an embodiment of this application;
FIG. 7 is diagram of a structure of another PPDU according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of still another communication apparatus according to an embodiment of this application.

### DESCRIPTION OF EMBODIMENTS

The following describes the technical solutions in embodiments of this application with reference to accompanying drawings in embodiments of this application. The terms "system" and "network" may be used interchangeably in embodiments of this application. Unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that have basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

For ease of understanding, some concepts related to embodiments of this application are described below for reference by using examples. Details are as follows.

A UWB technology is a new wireless communication technology. In the UWB technology, a nanosecond-level non-sinusoidal narrow impulse is used for data transmission, and modulation is performed on an impulse with very steep rise and fall time, and therefore, the UWB technology has a wide spectrum range for transmission and a signal has a bandwidth of a gigahertz (GHz) magnitude. A bandwidth used by a UWB is usually greater than 1 GHz. A UWB system does not need to generate a sinusoidal carrier signal and may directly transmit an impulse sequence. Therefore, the UWB system has a wide spectrum and low average power. A UWB wireless communication system has advantages of a strong multi-path resolution capability, low power consumption, high confidentiality, and the like. This facilitates coexistence with other systems, thereby improving spectrum utilization and system capacity. In addition, in a short-range communication application, transmit power of a UWB transmitter may be usually lower than 1 mW (milliwatt). Theoretically, interference generated by a UWB signal is only equivalent to white noise. This facilitates good coexistence between the ultra-wideband and existing narrowband communication. Therefore, both the UWB system and a narrowband (narrowband, NB) communication system can operate without interfering with each other.

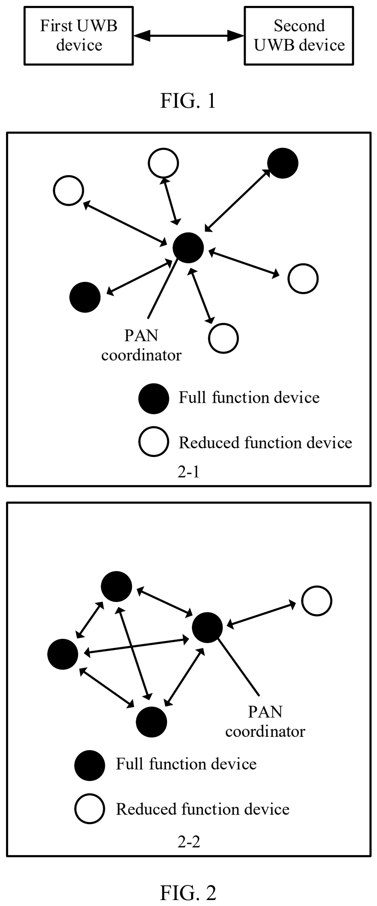

The following describes a communication system provided in an embodiment of this application. FIG. 1 is a diagram of a structure of a wireless communication system according to an embodiment of this application. As shown in FIG. 1, a first UWB device and a second UWB device are included. The first UWB device may perform data communication with the second UWB device. The following further describes in detail a UWB device (for example, the first UWB device or the second UWB device) in the wireless communication system.

The UWB device in this application may support 802.15 series protocols, for example, the 802.15.4ab standard or a next-generation standard of 802.15.4ab. The UWB device in this application may further support other standard protocols (for example, 802.11 series protocols), such as a plurality of wireless local area network (wireless local area network, WLAN) standards of an 802.11 family, for example, 802.11be, Wi-Fi 7, or EHT (extremely high throughput, extremely high throughput), and for another example, a next generation of 802.11be, Wi-Fi 8, UHR (ultra high throughput, ultra high throughput), or Wi-Fi AI (Wi-Fi artificial intelligence). The UWB device in this application may further support UWB-based sensing (sensing) protocols, for example, 802.11bf or a next-generation standard of 802.11bf.

For example, the UWB device in this application may be a communication server, a router, a switch, a bridge, a computer, a mobile phone, or the like that supports a UWB technology, or may be user equipment (user equipment, UE). The user equipment may include various handheld devices that support the UWB technology, a vehicle-mounted device (for example, a vehicle or a component mounted in the vehicle), a wearable device, an internet of things (internet of things, IoT) device (for example, an internet of things node or sensor), a computing device, another processing device connected to a wireless modem, or a sensor in a smart city. The UWB device in this application may alternatively be a central control point, for example, a personal area network (personal area network, PAN) or a PAN coordinator (coordinator). The PAN or the PAN coordinator may be a communication server, a router, a switch, a bridge, a computer, a vehicle-mounted device, an anchor (Anchor), a tag (tag), a smart home (for example, a smart camera, a smart remote controller, or a smart water meter), or the like. For another example, the UWB device in this application may include a chip. For example, the chip may be disposed in a communication server, a router, a switch, a bridge, a computer, or a mobile phone. For another example, the UWB device in this application may include a UWB module. An apparatus or a chip that implements a function of the UWB system may be referred to as a UWB module. Optionally, the UWB device in this application may further include a narrowband communication module. An apparatus or a chip that implements a function of a narrowband communication system may be referred to as a narrowband communication module. In a possible implementation, the UWB module and the narrowband communication module may be integrated into an apparatus or a chip in the UWB device, or may be independently deployed in the UWB device.

The following describes a specific example of a system architecture shown in FIG. 1 with reference to FIG. 2. In 2-1 in FIG. 2 or 2-2 in FIG. 2, one central control node (for example, a personal area network (personal area network, PAN) coordinator (coordinator)) and one or more other devices are included. The central control node herein may be a full function device (full function device), and the other devices may be full function devices or reduced function devices (reduced function devices). The full function device is relative to the reduced function device. For example, the reduced function device cannot be a PAN coordinator. For another example, compared with the full function device, the reduced function device may have no coordination capability or have a lower communication rate than the full function device.

It should be noted that, in 2-1 in FIG. 2, this wireless communication system is of a star topology structure, and the central control node may perform data communication with the one or more other devices. In 2-2 in FIG. 2, this wireless communication system is of a point-to-point topology structure, the central control node may perform data communication with the one or more other devices, and the plurality of other devices may also perform data communication with each other.

In addition, the communication systems shown in FIG. 1 and FIG. 2 do not constitute any limitation on a communication system to which embodiments of this application are applicable. For example, the technical solutions provided in this application may be applied to a wireless personal area network (wireless personal area network, WPAN) based on the UWB technology. For example, the IEEE 802.15 series protocols include the 802.15.4a protocol, the 802.15.4z protocol, the 802.15.4ab protocol, or a future-generation UWB WPAN standard. The technical solutions provided in this application may also be applied to various communication systems, for example, an internet of things (internet of things, IoT) system, an internet of vehicles (vehicle to X, V2X) system, a narrowband internet of things (narrow band internet of things, NB-IoT) system, a long term evolution (long term evolution, LTE) frequency division duplex (frequency division duplex, FDD) system, an LTE time division duplex (time division duplex, TDD) system, a worldwide interoperability for microwave access (worldwide interoperability for microwave access, WiMAX) communication system, an LTE system, a 5th generation (5th-generation, 5G) communication system, and a 6th generation (6th-generation, 6G) communication system.

It should be noted that embodiments of this application are mainly described by using a WPAN, for example, a network used in the IEEE 802.15 series standards, as an example. However, various aspects of this application may also be extended to another network using various standards or protocols, for example, a wireless local area network (wireless local area network, WLAN), Bluetooth (BLUETOOTH), a high performance radio LAN (high performance radio LAN, HIPERLAN) (a wireless standard similar to the IEEE 802.11 standard, mainly used in Europe), a wide area network (WAN), or another network known now or developed in the future. Therefore, regardless of used coverage and a used wireless access protocol, various aspects provided in this application are applicable to any appropriate wireless network.

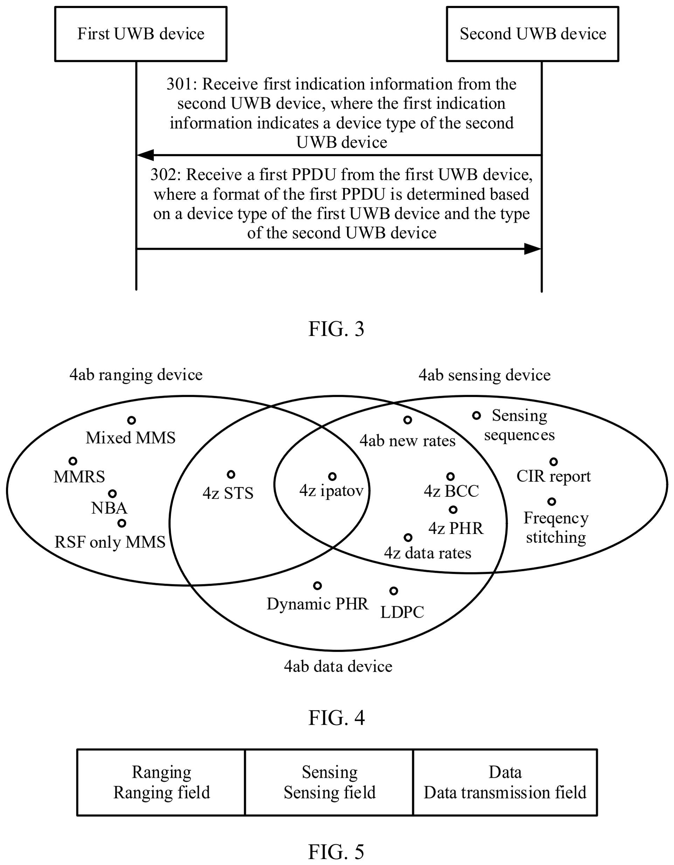

The following describes in detail a communication method provided in embodiments of this application with reference to FIG. 1 and FIG. 2. FIG. 3 shows a communication method according to an embodiment of this application. The communication method includes but is not limited to the following steps.

301: A first UWB device receives first indication information from a second UWB device, where the first indication information indicates a device type of the second UWB device.

Correspondingly, the second UWB device sends the first indication information to the first UWB device.

A UWB device in this application may belong to one or more device types. For example, a device type of the first UWB device or the device type of the second UWB device may include at least one of the following: a ranging device, a sensing device, and a data transmission device. The ranging device is a device mainly configured to perform ranging, and may support a multi-millisecond fragment ranging feature. As shown in FIG. 4, a ranging device defined in the 4ab standard (4ab ranging device) may support at least one of a mixed multi-millisecond (mixed multi-millisecond, mixed MMS), a multi-millisecond ranging sequence (multi-millisecond ranging sequence, MMRS), narrowband assistance (narrowband assistance, NBA), a ranging sequence fragment only multi-millisecond (ranging sequence fragment only multi-millisecond, RSF only MMS), a scrambled timestamp sequence in the 4z standard (4z scrambled timestamp sequence, 4z STS), an ipatov (4z ipatov) sequence in the 4z standard, and the like. The sensing device is a UWB device that supports performing sensing measurement by sending a UWB sensing PPDU. As shown in FIG. 4, a sensing device in the 4ab standard (4ab sensing device) may support at least one of the 4z ipatov sequence, new rates in the 4ab standard (4ab new rates), sensing sequences (sensing sequences), a BCC defined in the 4z standard (4z BCC), a channel impulse response report (CIR report), a PHR in the 4z standard (4z PHR), frequency stitching (frequency stitching), data rates in the 4z standard (4z data rates), and the like. The data transmission device is a device that can send, via the UWB, a data PPDU including a payload (payload). As shown in FIG. 4, a data transmission device in the 4ab standard (4ab data device) may support 4z STS, 4z ipatov, 4ab new rates, 4z BCC, 4z PHR, 4z data rates, a dynamic PHR (dynamic PHR), and LDPC. In addition, in this application, the data transmission device may also be referred to as a data communication device. This is not limited herein.

In a possible implementation, the ranging device may include a general ranging device and/or an advanced ranging device. The general ranging device may support a basic narrowband-assisted ranging function. In addition to the narrowband-assisted ranging function, the advanced ranging device may further support a UWB communication function, for example, may include various rate modes in a binary convolutional coding (binary convolution code, BCC) condition in the 4ab standard (for example, 1.95 Mb/s, 7.8 Mb/s, 31.2 Mb/s, or 62.4 Mb/s). Compared with the data transmission device, the advanced ranging device lacks support for LDPC coding and dynamic PHR.

In a possible implementation, the sensing device may include a general sensing device and/or an advanced sensing device. The general sensing device may support performing sensing measurement and sensing result reporting by sending a UWB sensing PPDU, and may further support rate modes in BCC coding in the 4ab standard (for example, 1.95 Mb/s, 7.8 Mb/s, 1.2 Mb/s, 2.4 Mb/s, or 124.8 Mb/s). In addition to the functions of the general sensing device, the advanced sensing device may further support the LDPC coding and dynamic PHR.

In a possible implementation, the data transmission device may include a general data transmission device and/or an advanced data transmission device. The data transmission device may be classified into the general data transmission device and the advanced data transmission device based on whether the data transmission device supports the LDPC coding and dynamic PHR. In addition to the general data transmission device, the advanced data transmission device may further support the LDPC coding and dynamic PHR.

Optionally, a same UWB device may be classified into one or more subtypes of at least one device type. For example, when the device type of the first UWB device is a ranging device, the first UWB device may further be a general ranging device, or the first UWB device may further be an advanced ranging device. For another example, when the device type of the second UWB device is a sensing device, the second UWB device may further be a general sensing device, or the second UWB device may further be an advanced sensing device. For another example, when the device type of the first UWB device includes a ranging device and a sensing device, the first UWB device may further be a general ranging device, an advanced ranging device, or the like. The foregoing description is merely an example, and other combination manners may be further included. This is not enumerated herein.

It should be noted that, in this application, when indication information indicates a corresponding device type, one or more fields, or the like may be used for indication. For example, when the first indication information indicates the device type of the second UWB device, one or more fields may be used for indication. For example, as shown in FIG. 5, a ranging (ranging) field, a sensing (sensing) field, and a data (data) transmission field are included. For example, when a value of the ranging field is 1, the first indication information may indicate that the device type of the second UWB device is the ranging device; or when a value of the ranging field is 0, the first indication information may indicate that the second UWB device is not the ranging device. For another example, when a value of the sensing field is 1, the first indication information may indicate that the device type of the second UWB device is the sensing device; or when a value of the sensing field is 0, the first indication information may indicate that the second UWB device is not the sensing device. For another example, when a value of the data transmission field is 1, the first indication information may indicate that the device type of the second UWB device is the data transmission device; or when a value of the data transmission field is 0, the first indication information may indicate that the second UWB device is not the data transmission device. The foregoing description is merely an example. The value of the ranging field, the sensing field, or the data transmission field is not limited in this application.

Optionally, at least one of the ranging field, the sensing field, the data transmission field, and the like may be included in a physical layer information base (physical layer information base, PHY-PIB).

302: The second UWB device receives a first PPDU from the first UWB device, where a format of the first PPDU is determined based on the device type of the first UWB device and the type of the second UWB device.

Correspondingly, the first UWB device sends the first PPDU to the second UWB device.

In a possible implementation, the method may further include: The second UWB device receives second indication information from the first UWB device, where the second indication information indicates the format of the first PPDU. Step 302 may be understood as that the second UWB device receives the first PPDU from the first UWB device based on the format of the first PPDU.

In another possible implementation, the method may further include: The second UWB device receives third indication information from the first UWB device, where the third indication information indicates the device type of the first UWB device; and the second UWB device determines the format of the first PPDU based on the device type of the first UWB device and the type of the second UWB device. Step 302 may be understood as that the second UWB device receives the first PPDU from the first UWB device based on the format of the first PPDU.

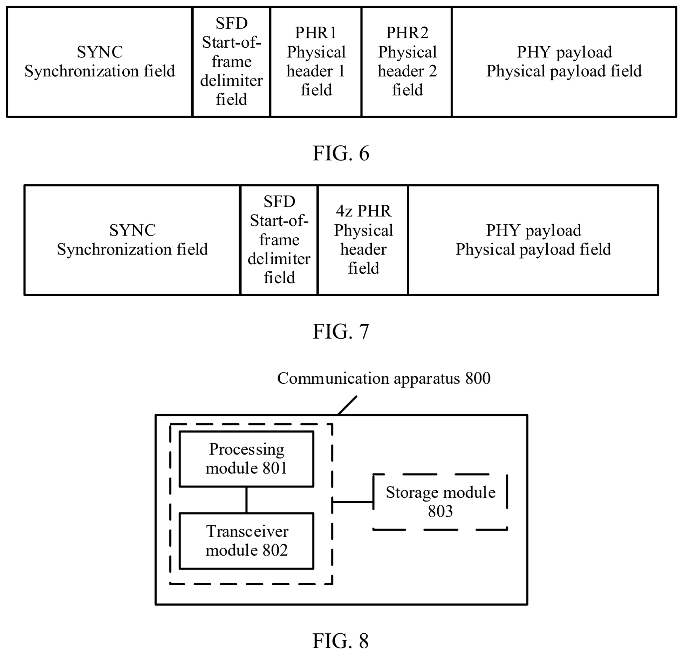

In a possible implementation, when the first UWB device and the second UWB device are of a device type that supports the dynamic PHR, the format of the first PPDU is a first format, and the PPDU in the first format includes two PHRs. As shown in FIG. 6, a PPDU may include a synchronization (synchronization, SYNC) field, a start-of-frame delimiter (start-of-frame delimiter, SFD) field, a PHR1 field, a PHR2 field, and a physical payload (PHY payload) field. The SYNC field and the SFD field may be used by a receive end to perform PPDU detection and synchronization, the PHR1 field indicates a rate and a modulation and coding scheme that are used by the PHR2 field and a rate and a modulation and coding scheme that are used by the physical payload field, the PHR2 field indicates a length of the physical payload, and the physical payload field is used to carry data. It should be noted that the PHR mentioned in this application may also be referred to as a physical header or a physical header. This is not limited.

In another possible implementation, when the first UWB device and/or the second UWB device are/is of a device type that does not support the dynamic PHR, the format of the first PPDU is a second format, and the PPDU in the second format includes one PHR. As shown in FIG. 7, a PPDU may include an SYNC field, an SFD field, a 4z PHR field, and a physical payload field. The SYNC field, the SFD field, and the physical payload field in FIG. 7 are similar to those in FIG. 6. Details are not described herein again. The 4z PHR field may be understood as a PHR field defined in the 4z standard. In other words, the 4z PHR field indicates a length of the physical payload, and may further indicate whether the PPDU is a ranging packet or the like.

In the foregoing embodiment, the format of the PPDU sent by the first UWB device to the second UWB device is determined based on the device type of the first UWB device and the type of the second UWB device, and the type of the second UWB device is indicated by the first indication information. This indicates that the format of the PPDU sent by the first UWB device to the second UWB device may be determined between the first UWB device and the second UWB device without a complex interaction process. In other words, this simplifies an interaction procedure for negotiating a PPDU structure, thereby reducing a communication delay.

In a possible implementation, when the format of the first PPDU is the first format, the method further includes: An upper layer of the first UWB device sends a first primitive to a PHY layer of the first UWB device, where the first primitive indicates a rate and a modulation and coding scheme that are used by a PHR (namely, the PHR2 in FIG. 6) in the first PPDU and a rate and a modulation and coding scheme that are used by a physical payload in the first PPDU, and the PHR in the first PPDU indicates a length of the physical payload in the first PPDU; and the physical layer of the first UWB device generates the first PPDU based on the rate and the modulation and coding scheme that are indicated by the first primitive. In this way, the physical layer of the first UWB device can generate the first PPDU that meets an upper-layer requirement, to ensure that the second UWB device can correctly decode the first PPDU.

Optionally, the upper layer of the first UWB device may be a MAC layer.

The first primitive may be, for example, MCPS-DATA.request primitive.

Optionally, a rate and a modulation and coding scheme that are used by the PHR (namely, the PHR2 in FIG. 6) in the first PPDU and a rate and a modulation and coding scheme that are used by the physical payload in the first PPDU may be determined by the first UWB device and the second UWB device through negotiation. A specific process is not limited herein. In addition, in this application, the rate and the modulation and coding scheme of the physical payload in the first PPDU may also be referred to as a rate and a modulation and coding scheme of a physical layer service data unit (PHY service data unit, PSDU) in the first PPDU. This is not limited herein.

The first primitive indicates, in any one of the following manners, the rate and the modulation and coding scheme that are used by the PHR (namely, the PHR2 in FIG. 6) in the first PPDU and the rate and the modulation and coding scheme that are used by the physical payload in the first PPDU:

1. The first primitive includes a first data rate field, the first data rate field indicates a first index, the first index is associated with first information, and the first information indicates at least one of the following: the first UWB device determining to use the dynamic PHR, a constraint length of convolutional code used by the first UWB device, whether the first UWB device supports LDPC, the rate of the PHR (namely, the PHR2 in FIG. 6) in the first PPDU, and the rate of the physical payload in the first PPDU. This can reduce indication overheads.

2. The first primitive includes a second data rate field and a code field, the second data rate field indicates the rate of the physical payload in the first PPDU, and the code field indicates a constraint length of convolutional code used by the first UWB device and/or whether the first UWB device supports LDPC.

It should be noted that, in this application, the first index may be referred to as a modulation and coding combination index.

Optionally, for the foregoing manner 1, as shown in Table 1, when a physical high-pulse repetition frequency UWB physical header and data rate (phyHrpUwbPhrDataRate) parameter is (DRMDR), the first UWB device determines to use the dynamic PHR. When a physical high-pulse repetition frequency UWB convolutional code constraint length (phyHrpUwbCcConstraintLength) parameter is CL3 or CL7, the constraint length of the convolutional code used by the first UWB device is 3 or 7; or when a phyHrpUwbCcConstraintLength parameter is x, the constraint length of the convolutional code used by the first UWB device is not limited. When a physical high-pulse repetition frequency UWBLDPC (phyHrpUwbLDPC) parameter is 0, the first UWB device supports the LDPC; or when a phyHrpUwbLDPC parameter is 1, the first UWB device does not support the LDPC. The reverse is also applicable. When the first UWB device supports the LDPC, it indicates that the physical payload in the first PPDU may use the LDPC coding, and the PHR (namely, the PHR2 in FIG. 6) in the first PPDU may use the BCC coding. When the first UWB device does not support the LDPC, the PHR (namely, the PHR2 in FIG. 6) in the first PPDU and the physical payload in the first PPDU use a same modulation and coding scheme, a specific modulation and coding scheme is determined based on the indicated rate of the PSDU corresponding to the section 15.3.4 in the IEEE802.15.4 standard. When the LDPC coding is used, the rate of the PHR (namely, the PHR2 in FIG. 6) in the first PPDU is half of the rate of the physical payload in the first PPDU, and a reason is that the first PPDU includes the two PHRs, in other words, encoded information of a PHR field is repeated twice. The rate of the PHR (namely, the PHR2 in FIG. 6) in the first PPDU may be 1.95 Mb/s, 0.975 Mb/s, 7.8 Mb/s, or the like in Table 1. The rate of the physical payload in the first PPDU may be 1.95 Mb/s, 7.8 Mb/s, 31.2 Mb/s, or the like in Table 1.

It should be noted that the phyHrpUwbPhrDataRate parameter, the phyHrpUwbLDPC parameter, and the phyHrpUwbCcConstraintLength parameter in Table 1 may be referred to as PHY-PIB attributes.

Optionally, one first index may be associated with one type of first information. As shown in Table 1, when the first index is 1, the associated phyHrpUwbPhrDataRate parameter, phyHrpUwbCcConstraintLength parameter, phyHrpUwbLDPC parameter, PHR2 bit rate (bit Rate), and PSDU bit rate are respectively DRMDR, CL7, 0, 1.95 Mb/s, and 1.95 Mb/s. In other words, when the first index is 1, the associated first information indicates at least one of the following: The first UWB device determines to use the dynamic PHR, the constraint length of the convolutional code used by the first UWB device is 7, the first UWB device supports the LDPC, the rate of the PHR (namely, the PHR2 in FIG. 6) in the first PPDU is 1.95 Mb/s, and the rate of the physical payload in the first PPDU is 1.95 Mb/s. Others in Table 1 are similar. Details are not described herein again.

**Table 1**

| First index | phyHrpUwbPhrData Rate | phyHrpUwbCcConstraintLength | phyHrpUwbLDPC | PHR2 bit rate (Mb/s) | PSDU bit rate (Mb/s) |
|---|---|---|---|---|---|
| 1 | DRMDR | CL7 | 0 | 1.95 | 1.95 |
| 2 | DRMDR | x | 1 | 0.975 | 1.95 |
| 3 | DRMDR | CL7 | 0 | 7.8 | 7.8 |
| 4 | DRMDR | x | 1 | 3.9 | 7.8 |
| 5 | DRMDR | CL7 | 0 | 31.2 | 31.2 |
| 6 | DRMDR | x | 1 | 15.6 | 31.2 |
| 7 | DRMDR | CL7 | 0 | 62.4 | 62.4 |
| 8 | DRMDR | x | 1 | 31.2 | 62.4 |
| 9 | DRMDR | CL7 | 0 | 124.8 | 124.8 |
| 10 | DRMDR | x | 1 | 62.4 | 124.8 |
| 11 | DRMDR | CL3 | 0 | 3.9 | 6.8 |
| 12 | DRMDR | CL3 | 0 | 15.6 | 27.2 |

Optionally, when the first primitive includes the first data rate field, the first primitive may further include a type of a value of the first data rate field, for example, an integer (integer).

Optionally, when the first primitive includes the first data rate field, the first primitive may further include a valid range of a value of the first data rate field, for example, 0 to (4+k). In a possible implementation, for an HRP UWB physical layer, values 1 to 4 are valid, and indicate four rate and modulation and coding combination modes defined in the section 15.2.7 (to be compatible with 802.15.4a). Values 5 to (4+K) are valid, and respectively indicate K (for example, 12) modulation and coding combinations in Table 1, that is, the 12 first indexes. For details, refer to Table 2. The data rate (DataRate), the type (type), and the valid range (valid range) in Table 2 may be respectively understood as the first data rate field, the type of the value of the first data rate field, and the valid range of the value of the first data rate field. In another possible implementation, when the UWB device in this application does not support the 802.15.4a standard, values 1 to 4 do not need to indicate the four rates defined in the section 15.2.7 in the IEEE802.15.4 standard, in other words, all values of the first data rate field may indicate corresponding modulation and coding combinations in Table 1, that is, the 12 first indexes. It should be noted that, for a physical layer other than the HRP UWB physical layer, the value of the DataRate may be interpreted in another manner. This is not limited herein.

**Table 2**

| Name (name) | Type (type) | Valid range (valid range) | Description (description) |
|---|---|---|---|
| DataRate | Integer | 0 to (4+K) | For the HRP UWB physical layer, the values 1 to 4 are valid, and indicate the four rate and modulation and coding combination modes defined in the section 15.2.7 (to be compatible with 802.15.4a); and the values 5 to (4+K) are valid, and respectively indicate the K modulation and coding combinations in Table 1. |
| ... | | | |

Optionally, when the first primitive includes the second data rate field and the code field, the rate of the physical payload in the first PPDU may be one of 1.95 Mb/s, 7.8 Mb/s (or 6.8 Mb/s), 31.2 Mb/s (or 27.2 Mb/s), 62.4 Mb/s, and 124.8 Mb/s.

Optionally, when the first primitive includes the second data rate field and the code field, the first primitive may further include a type of a value of the second data rate field, for example, an integer.

Optionally, when the first primitive includes the second data rate field and the code field, the first primitive may further include a valid range of a value of the second data rate field, for example, 0 to 9. In a possible implementation, for an HRP UWB physical layer, values 1 to 4 are valid, and indicate four rate and modulation and coding combination modes defined in the section 15.2.7 (to be compatible with 802.15.4a). Values 5 to 9 are valid, and respectively indicate five rates: 1.95 Mb/s, 7.8 Mb/s (or 6.8 Mb/s), 31.2 Mb/s (or 27.2 Mb/s), 62.4 Mb/s, and 124.8 Mb/s. For details, refer to Table 3. The DataRate, the type, and the valid range in Table 3 may be respectively understood as the second data rate field, the type of the value of the second data rate field, and the valid range of the value of the second data rate field. In another possible implementation, when the UWB device in this application does not support the 802.15.4a standard, values 1 to 4 do not need to indicate the four rates defined in the section 15.2.7 in the IEEE802.15.4 standard, in other words, values 5 to 9 of the second data rate field may respectively indicate five rates: 1.95 Mb/s, 7.8 Mb/s (or 6.8 Mb/s), 31.2 Mb/s (or 27.2 Mb/s), 62.4 Mb/s, and 124.8 Mb/s. It should be noted that, for a physical layer other than the HRP UWB physical layer, the value of the DataRate may be interpreted in another manner. This is not limited herein.

| Table 3 | | | |
|---|---|---|---|
| Name | Type | Valid range | Description |
| DataRate | Integer | 0 to 9 | For the HRP UWB physical layer, the values 1 to 4 are valid, and indicate the four rate and modulation and coding combination modes defined in the section 15.2.7 (to be compatible with 802.15.4a); and the values 5 to 9 are valid, and respectively indicate the five rates: 1.95 Mb/s, 7.8 Mb/s (or 6.8 Mb/s), 31.2 Mb/s (or 27.2 Mb/s), 62.4 Mb/s, and 124.8 Mb/s. |
| Code | Enumeration | CL3, CL7, and LDPC | CL3 indicates that the PHR and the physical payload in the first PPDU use a coding scheme of the convolutional code with the constraint length of 3, CL7 indicates that the PHR and the physical payload in the first PPDU use a coding scheme of the convolutional code with the constraint length of 7, and LDPC indicates that the physical payload in the first PPDU uses LDPC coding. |
| ... | | | |

Optionally, when the first primitive includes the second data rate field and the code field, the first primitive may further include a type of a value of the code field, for example, enumeration (enumeration). For details, refer to Table 3.

Optionally, when the first primitive includes the second data rate field and the code field, the first primitive may further include a valid range of a value of the code field, for example, CL3, CL7, or LDPC. For details, refer to Table 3. CL3 indicates that the PHR and the physical payload in the first PPDU use the coding scheme of the convolutional code with the constraint length of 3, CL7 indicates that the PHR and the physical payload in the first PPDU use the coding scheme of the convolutional code with the constraint length of 7, and LDPC indicates that the physical payload in the first PPDU uses the LDPC coding.

In a possible implementation, when the format of the first PPDU is the second format, a rate and a modulation and coding scheme that are used by a PHR (namely, the 4z PHR in FIG. 7) in the first PPDU and a rate and a modulation and coding scheme that are used by a physical payload in the first PPDU are determined based on at least one of a data rate type, the LDPC, and a constraint length of convolutional code that are determined by the first UWB device.

For example, the data rate type, the LDPC, and the constraint length of the convolutional code that are determined by the first UWB device may be respectively indicated by a phyHrpUwbPhrDataRate parameter, a phyHrpUwbLDPC parameter, and a phyHrpUwbCcConstraintLength parameter in Table 4. This may also be understood as that the first UWB device and the second UWB device determine PHY-PIB attributes (including the phyHrpUwbPhrDataRate parameter, the phyHrpUwbLDPC parameter, and the phyHrpUwbCcConstraintLength parameter) through negotiation, and further, the first UWB device and the second UWB device may learn of the rate and the modulation and coding scheme that are used by the PHR (namely, the 4z PHR in FIG. 7) in the first PPDU and the rate and the modulation and coding scheme that are used by the physical payload in the first PPDU. Specifically, in Table 4, second indexes may be referred to as modulation and coding combination indexes, and are respectively 1 to 12. The phyHrpUwbPhrDataRate parameter may be DRHM_VLR, DRHM_LR, DRHM_HR, DRHM_VHR, DRHM_HER, or the like, and is separately represented. Other parameters are similar to those in Table 1. Details are not described herein again.

**Table 4**

| Second index | phyHrpUwbPhrData Rate | phyHrpUwbCcConstraintLeng th | phyHrpUwbLDPC | 4z PHR bit rate (Mb/s) | PSDU bit rate (Mb/s) |
|---|---|---|---|---|---|
| 1 | DRHM_VLR | CL7 | 0 | 1.95 | 1.95 |
| 2 | DRHM_VLR | x | 1 | 0.975 | 1.95 |
| 3 | DRHM_LR | CL7 | 0 | 7.8 | 7.8 |
| 4 | DRHM_LR | x | 1 | 3.9 | 7.8 |
| 5 | DRHM_HR | CL7 | 0 | 31.2 | 31.2 |
| 6 | DRHM_HR | x | 1 | 15.6 | 31.2 |
| 7 | DRHM_VHR | CL7 | 0 | 62.4 | 62.4 |
| 8 | DRHM_VHR | x | 1 | 31.2 | 62.4 |
| 9 | DRHM_EHR | CL7 | 0 | 124.8 | 124.8 |
| 10 | DRHM_EHR | x | 1 | 62.4 | 124.8 |
| 11 | DRHM_LR | CL3 | 0 | 3.9 | 6.8 |
| 12 | DRHM_HR | CL3 | 0 | 15.6 | 27.2 |

For another example, an indication of the phyHrpUwbLDPC parameter may be combined into phyHrpUwbPhrDataRate, in other words, more values of phyHrpUwbPhrDataRate are defined to indicate used LDPC coding and a used rate. This may also be understood as that the data rate type, the LDPC, and the constraint length of the convolutional code that are determined by the first UWB device may be separately indicated by a phyHrpUwbPhrDataRate parameter and a phyHrpUwbCcConstraintLength parameter in Table 5. In other words, the first UWB device and the second UWB device determine PHY-PIB attributes (including the phyHrpUwbPhrDataRate parameter and the phyHrpUwbCcConstraintLength parameter) through negotiation, and further, the first UWB device and the second UWB device may learn of the rate and the modulation and coding scheme that are used by the PHR (namely, the 4z PHR in FIG. 7) in the first PPDU and the rate and the modulation and coding scheme that are used by the physical payload in the first PPDU. Specifically, in Table 5, third indexes may be referred to as modulation and coding combination indexes, and are respectively 1 to 12. The phyHrpUwbPhrDataRate parameter may be DRHM_VLR_A, DRHM_LR_A, DRHM_HR_A, DRHM_VHR_A, DRHM_HER_A, DRHM_VLR_B, DRHM_LR_B, DRHM_HR_B, DRHM_VHR_B, DRHM_HER_B, DRHM_HR_C, or the like. For example, DRHM_VLR_A indicates that the rate of the physical payload in the first PPDU is 1.95 Mb/s when the LDPC coding is used and the constraint length of the convolutional code used by the first UWB device is 7, that is, the third index is 1. For another example, DRHM_VLR_B indicates that the rate of the physical payload in the first PPDU is 1.95 Mb/s when the LDPC coding is not used and the constraint length of the convolutional code used by the first UWB device is not limited, that is, the third index is 2. The rest may be deduced by analogy. Details are not described herein. Other parameters in Table 5 are similar to those in Table 4. Details are not described herein again.

**Table 5**

| Third index | phyHrpUwbPhrDataRate | phyHrpUwbCcConstraintLength | 4z PHR bit rate (Mb/s) | PSDU bit rate (Mb/s) |
|---|---|---|---|---|
| 1 | DRHM_VLR_A | CL7 | 1.95 | 1.95 |
| 2 | DRHM_VLR_B | x | 0.975 | 1.95 |
| 3 | DRHM_LR_A | CL7 | 7.8 | 7.8 |
| 4 | DRHM_LR_B | x | 3.9 | 7.8 |
| 5 | DRHM_HR_A | CL7 | 31.2 | 31.2 |
| 6 | DRHM_HR_B | x | 15.6 | 31.2 |
| 7 | DRHM_VHR_A | CL7 | 62.4 | 62.4 |
| 8 | DRHM_VHR_B | x | 31.2 | 62.4 |
| 9 | DRHM_EHR_A | CL7 | 124.8 | 124.8 |
| 10 | DRHM_EHR_B | x | 62.4 | 124.8 |
| 11 | DRHM_LR_B | CL3 | 3.9 | 6.8 |
| 12 | DRHM_HR_C | CL3 | 15.6 | 27.2 |

The foregoing mainly describes the solutions provided in this application from a perspective of interaction between devices. It may be understood that in the foregoing implementations, to implement the foregoing functions, each device includes a corresponding hardware structure and/or software module for performing each function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the UWB device (for example, the first UWB device or the second UWB device) may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, there may be another division manner.

FIG. 8 is a diagram of a structure of a communication apparatus according to an embodiment of this application. The communication apparatus 800 may be used in the method shown in the embodiment in FIG. 3. As shown in FIG. 8, the communication apparatus 800 includes a processing module 801 and a transceiver module 802. The processing module 801 may be one or more processors, and the transceiver module 802 may be a transceiver or a communication interface. The communication apparatus may be configured to implement the UWB device (for example, the first UWB device or the second UWB device) in any one of the foregoing method embodiments, or configured to implement a function of the network element in any one of the foregoing method embodiments. The network element or network function may be a network component in a hardware device, a software function running on dedicated hardware, or a virtualization function instantiated on a platform (for example, a cloud platform). Optionally, the communication apparatus 800 may further include a storage module 803, configured to store program code and data that are of the communication apparatus 800.

In an example, the communication apparatus is used as the UWB device (for example, the first UWB device or the second UWB device) or a chip used in the UWB device, and performs the steps performed by the UWB device in the foregoing method embodiment. The transceiver module 802 is configured to specifically perform a sending action and/or receiving action performed by the UWB device in the embodiment shown in FIG. 3, for example, support the UWB device in performing another process of the technology described in this specification. The processing module 801 may be configured to support the communication apparatus 800 in performing a processing action in the foregoing method embodiment, for example, support the UWB device in performing another process of the technology described in this specification.

In a possible implementation, the transceiver module 802 is configured to: receive first indication information from the second UWB device, where the first indication information indicates a device type of the second UWB device; and send a first PPDU to the second UWB device, where a format of the first PPDU is determined based on a device type of the first UWB device and the type of the second UWB device.

Optionally, the device type of the first UWB device or the device type of the second UWB device includes at least one of the following: a ranging device, a sensing device, and a data transmission device.

Optionally, the ranging device may include a general ranging device and/or an advanced ranging device, where the general ranging device does not support a dynamic PHR and LDPC coding, and the advanced ranging device supports the dynamic PHR and the LDPC coding.

Optionally, the sensing device may include a general sensing device and/or an advanced sensing device, where the general sensing device does not support a dynamic PHR and LDPC coding, and the advanced sensing device supports the dynamic PHR and the LDPC coding.

Optionally, the data transmission device may include a general data transmission device and/or an advanced data transmission device, where the general data transmission device does not support a dynamic PHR and LDPC coding, and the advanced data transmission device supports the dynamic PHR and the LDPC coding.

Optionally, when the first UWB device and the second UWB device are of a device type that supports the dynamic PHR, the format of the first PPDU is a first format, and the PPDU in the first format includes two PHRs; or when the first UWB device and/or the second UWB device are/is of a device type that does not support the dynamic PHR, the format of the first PPDU is a second format, and the PPDU in the second format includes one PHR.

Optionally, when the format of the first PPDU is the first format, an upper layer of the first UWB device sends a first primitive to a PHY layer of the first UWB device via the transceiver module 802, where the first primitive indicates a rate and a modulation and coding scheme that are used by a PHR in the first PPDU and a rate and a modulation and coding scheme that are used by a physical payload in the first PPDU, and the PHR in the first PPDU indicates a length of the physical payload in the first PPDU; and the physical layer of the first UWB device generates the first PPDU based on the rate and the modulation and coding scheme that are indicated by the first primitive.

Optionally, the first primitive includes a first data rate field, the first data rate field indicates a first index, the first index is associated with first information, and the first information indicates at least one of the following: the first UWB device determining to use the dynamic PHR, a constraint length of convolutional code used by the first UWB device, whether the first UWB device supports the LDPC, the rate of the PHR in the first PPDU, and the rate of the physical payload in the first PPDU.

Optionally, the first primitive includes a second data rate field and a code field, the second data rate field indicates the rate of the physical payload in the first PPDU, and the code field indicates a constraint length of convolutional code used by the first UWB device and/or whether the first UWB device supports the LDPC.

Optionally, when the format of the first PPDU is the second format, a rate and a modulation and coding scheme that are used by a PHR in the first PPDU and a rate and a modulation and coding scheme that are used by a physical payload in the first PPDU are determined based on at least one of a data rate type, the LDPC, and a constraint length of convolutional code that are determined by the first UWB device.

In another possible implementation, the transceiver module 802 is configured to: send first indication information to the first UWB device, where the first indication information indicates a device type of the second UWB device; and receive a first PPDU from the first UWB device, where a format of the first PPDU is determined based on a device type of the first UWB device and the type of the second UWB device.

Optionally, the device type of the first UWB device or the device type of the second UWB device includes at least one of the following: a ranging device, a sensing device, and a data transmission device.

Optionally, the ranging device may include a general ranging device and/or an advanced ranging device, where the general ranging device does not support a dynamic PHR and LDPC coding, and the advanced ranging device supports the dynamic PHR and the LDPC coding.

Optionally, the sensing device may include a general sensing device and/or an advanced sensing device, where the general sensing device does not support a dynamic PHR and LDPC coding, and the advanced sensing device supports the dynamic PHR and the LDPC coding.

Optionally, the data transmission device may include a general data transmission device and/or an advanced data transmission device, where the general data transmission device does not support a dynamic PHR and LDPC coding, and the advanced data transmission device supports the dynamic PHR and the LDPC coding.

Optionally, when the UWB device (for example, the first UWB device or the second UWB device) is a chip, the processing module 801 may be one or more processors, and the transceiver module 802 may be a transceiver; or the transceiver module 802 may be a sending module and a receiving module, the sending module may be a transmitter, the receiving module may be a receiver, and the sending module and the receiving module are integrated into one component, for example, a transceiver. In this embodiment of this application, the processor and the transceiver may be coupled, or the like. A manner of connection between the processor and the transceiver is not limited in embodiments of this application. In a process of performing the foregoing method, a process of sending information (for example, sending a PPDU) in the foregoing method may be understood as a process of outputting the information by the processor. When outputting the information, the processor outputs the information to the transceiver, so that the transceiver transmits the information. After the information is output by the processor, other processing may further need to be performed on the information before processed information arrives at the transceiver. Similarly, a process of receiving information (for example, receiving a PPDU) in the foregoing method may be understood as a process of receiving the input information by the processor. When the processor receives the input information, the transceiver receives the information, and inputs the information into the processor. Further, after the transceiver receives the information, other processing may further need to be performed on the information before processed information is input into the processor.

The foregoing descriptions are possible product forms of the communication apparatus shown in FIG. 8. It should be understood that any product in any form that has a function of the communication apparatus in FIG. 8 falls within the protection scope of embodiments of this application. It should be further understood that the foregoing descriptions are merely examples, and a product form of the communication apparatus in embodiments of this application is not limited thereto.

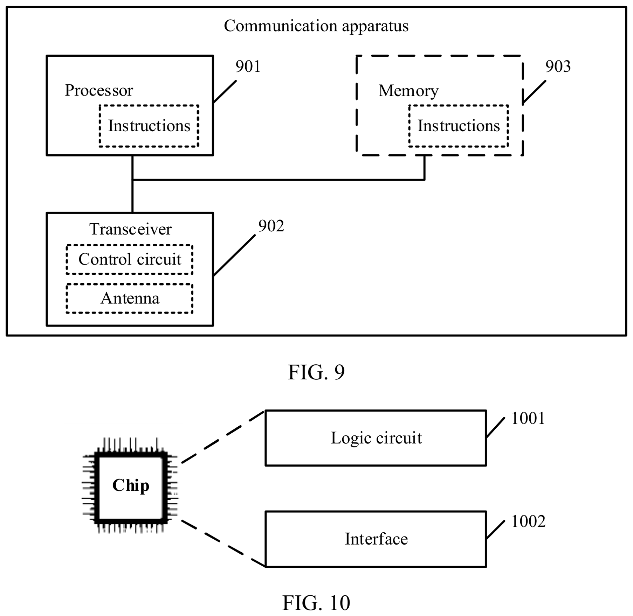

FIG. 9 is a diagram of a structure of another communication apparatus according to an embodiment of this application. The communication apparatus may be a UWB device (for example, a first UWB device or a second UWB device) or a chip in the UWB device. FIG. 9 shows only main components of the communication apparatus. In addition to a processor 901 and a transceiver 902, the communication apparatus may further include a memory 903 and an input/output apparatus (not shown in the figure). The processor 901 is mainly configured to process a communication protocol and communication data, control the entire communication apparatus, execute a software program, and process data of the software program. The memory 903 is mainly configured to store the software program and the data. The transceiver 902 may include a control circuit and an antenna. The control circuit is mainly configured to perform conversion between a baseband signal and a radio frequency signal, and process the radio frequency signal. The antenna is mainly configured to receive or send a radio frequency signal in a form of an electromagnetic wave. The input/output apparatus, for example, a touchscreen, a display, or a keyboard, is mainly configured to receive data input by a user and output data to the user.

After the communication apparatus is powered on, the processor 901 may read the software program in the memory 903, interpret and execute instructions of the software program, and process data of the software program. When data needs to be sent wirelessly, the processor 901 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 901. The processor 901 converts the baseband signal into data and processes the data. In another implementation, the radio frequency circuit and the antenna may be disposed independently of the processor that performs baseband processing. For example, in a distributed scenario, the radio frequency circuit and the antenna may be remotely disposed independently of the communication apparatus.

The processor 901, the transceiver 902, and the memory 903 may be connected through a communication bus.

For example, when the communication apparatus is configured to perform the steps, methods, or functions performed by the first UWB device in the foregoing method embodiment, the processor 901 may be configured to perform another process of the technology described in this specification. The transceiver 902 may be configured to perform step 301 in FIG. 3 and/or another process of the technology described in this specification. For another example, when the communication apparatus is configured to perform the steps, methods, or functions performed by the second UWB device in the foregoing method embodiment, the processor 901 may be configured to perform another process of the technology described in this specification. The transceiver 902 may be configured to perform step 302 in FIG. 3 and/or another process of the technology described in this specification.

In an implementation, the processor 901 may store instructions. The instructions may be a computer program. The computer program is run on the processor 901, to enable the communication apparatus to perform the method described in the foregoing method embodiment. The computer program may be fixed in the processor 901. In this case, the processor 901 may be implemented by hardware.

In an implementation, the communication apparatus may include a circuit. The circuit may implement the sending, receiving, or communication function in the foregoing method embodiment. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (N-type metal oxide semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in embodiments of this application may further have more components than those shown in FIG. 9, and the like. This is not limited in embodiments of this application. The foregoing methods performed by the processor and the transceiver are merely examples. For specific steps performed by the processor and the transceiver, refer to the descriptions in the foregoing method embodiment.

In another possible implementation, in the communication apparatus shown in FIG. 8, the processing module 801 may be one or more logic circuits, and the transceiver module 802 may be an input/output interface that is also referred to as a communication interface, an interface circuit, an interface, or the like. Alternatively, the transceiver module 802 may be a sending module and a receiving module. The sending module may be an output interface, and the receiving module may be an input interface. The sending module and the receiving module are integrated into one unit, for example, an input/output interface.

FIG. 10 is a diagram of a structure of still another communication apparatus according to an embodiment of this application. As shown in FIG. 10, the communication apparatus shown in FIG. 10 includes a logic circuit 1001 and an interface 1002. In other words, the processing module 801 may be implemented through the logic circuit 1001, and the transceiver module 802 may be implemented through the interface 1002. The logic circuit 1001 may be a chip, a processing circuit, an integrated circuit, a system on chip (system on chip, SoC), or the like. The interface 1002 may be a communication interface, an input/output interface, a pin, or the like. For example, FIG. 10 shows an example in which the communication apparatus is a chip. The chip includes the logic circuit 1001 and the interface 1002. Optionally, the logic circuit and the interface may be further coupled to each other. A specific manner of connection between the logic circuit and the interface is not limited in embodiments of this application.

For example, when the communication apparatus is configured to perform the steps, methods, or functions performed by a first UWB device in the foregoing method embodiment, the interface 1002 is configured to: receive first indication information from a second UWB device, where the first indication information indicates a device type of the second UWB device; and send a first PPDU to the second UWB device, where a format of the first PPDU is determined based on the device type of the first UWB device and the type of the second UWB device. For another example, when the communication apparatus is configured to perform the steps, methods, or functions performed by a second UWB device in the foregoing method embodiment, the interface 1002 is configured to: send first indication information to a first UWB device, where the first indication information indicates a device type of the second UWB device; and receive a first PPDU from the first UWB device, where a format of the first PPDU is determined based on a device type of the first UWB device and the type of the second UWB device. For specific descriptions of the device type of the first UWB device, the type of the second UWB device, and the like, refer to the foregoing method embodiment. Details are not described herein again.

It may be understood that the communication apparatus described in embodiments of this application may implement the method provided in embodiments of this application in a form of hardware, or may implement the method provided in embodiments of this application in a form of software. This is not limited in embodiments of this application. For specific implementations of the embodiment shown in FIG. 10, refer to the foregoing embodiments. Details are not described herein again.

An embodiment of this application further provides a communication apparatus. The communication apparatus includes at least one processor and a memory. The memory is configured to store a computer program or instructions. The at least one processor is configured to execute the computer program or the instructions in the memory, so that the method in any one of the implementations in the embodiment shown in FIG. 3 is performed.

An embodiment of this application further provides a computer-readable storage medium. The computer-readable storage medium stores computer instructions. When the computer instructions are executed, a computer is enabled to perform the method in any one of the implementations in the embodiment shown in FIG. 3.

An embodiment of this application further provides a computer program product. The computer program product includes computer program code. When the computer program code is run by a computer, the computer is enabled to perform the method in any one of the implementations in the embodiment shown in FIG. 3.

An embodiment of this application further provides a chip. The chip includes at least one processor and an interface. The processor is configured to read and execute instructions stored in a memory. When the instructions are run, the chip is enabled to perform the method in any one of the implementations in the embodiment shown in FIG. 3.

The foregoing units described as separate parts may or may not be physically separate, and parts displayed as units may or may not be physical units, may be located at one location, or may be distributed on a plurality of network units. Some or all of the units may be selected based on an actual requirement to achieve the objectives of the solutions in embodiments of this application. In addition, various network element units in embodiments of this application may be integrated into one processing unit, or each of the units may exist alone physically, or two or more units may be integrated into one unit. The integrated unit may be implemented in a form of hardware, or may be implemented in a form of a software network element unit.

When the integrated unit is implemented in the form of the software network element unit and sold or used as an independent product, the integrated unit may be stored in a computer-readable storage medium. Based on such an understanding, an essentially contributing part in the technical solutions of this application, or all or some of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the method in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first ultra-wideband UWB device, and the method comprises:
receiving first indication information from a second UWB device, wherein the first indication information indicates a device type of the second UWB device; and
sending a first physical layer protocol data unit PPDU to the second UWB device, wherein a format of the first PPDU is determined based on a device type of the first UWB device and a device type of the second UWB device.

2. The method according to claim 1, wherein the device type of the first UWB device or the device type of the second UWB device comprises at least one of the following: a ranging device, a sensing device, and a data transmission device.

3. The method according to claim 2, wherein the ranging device comprises a general ranging device and/or an advanced ranging device, wherein the general ranging device does not support a dynamic physical header and low-density parity-check coding, and the advanced ranging device supports the dynamic physical header and the low-density parity-check coding.

4. The method according to claim 2, wherein the sensing device comprises a general sensing device and/or an advanced sensing device, wherein the general sensing device does not support a dynamic physical header and low-density parity-check coding, and the advanced sensing device supports the dynamic physical header and the low-density parity-check coding.

5. The method according to claim 2, wherein the data transmission device comprises a general data transmission device and/or an advanced data transmission device, wherein the general data transmission device does not support a dynamic physical header and low-density parity-check coding, and the advanced data transmission device supports the dynamic physical header and the low-density parity-check coding.

6. The method according to any one of claims 1 to 5, wherein
when the first UWB device and the second UWB device are of a device type that supports the dynamic physical header, the format of the first PPDU is a first format, and the first PPDU in the first format comprises two physical headers; or
when the first UWB device and/or the second UWB device are/is of a device type that does not support the dynamic physical header, the format of the first PPDU is a second format, and the first PPDU in the second format comprises one physical header.

7. The method according to any one of claims 1 to 6, wherein when the format of the first PPDU is the first format, the method further comprises:
sending, by an upper layer of the first UWB device, a first primitive to a physical layer of the first UWB device, wherein the first primitive indicates a rate and a modulation and coding scheme that are used by a physical header in the first PPDU and a rate and a modulation and coding scheme that are used by a physical payload in the first PPDU, and the physical header in the first PPDU indicates a length of the physical payload in the first PPDU; and
generating, by the physical layer of the first UWB device, the first PPDU based on the rate and the modulation and coding scheme that are indicated by the first primitive.

8. The method according to claim 7, wherein the first primitive comprises a first data rate field, the first data rate field indicates a first index, the first index is associated with first information, and the first information indicates at least one of the following: the first UWB device determining to use the dynamic physical header, a constraint length of convolutional code used by the first UWB device, whether the first UWB device supports the low-density parity-check coding, the rate of the physical header in the first PPDU, and the rate of the physical payload in the first PPDU.

9. The method according to claim 7, wherein the first primitive comprises a second data rate field and a code field, the second data rate field indicates a rate of the physical payload in the first PPDU, and the code field indicates a constraint length of convolutional code used by the first UWB device and/or whether the first UWB device supports the low-density parity-check coding.

10. The method according to any one of claims 1 to 6, wherein when the format of the first PPDU is the second format, a rate and a modulation and coding scheme that are used by a physical header in the first PPDU and a rate and a modulation and coding scheme that are used by a physical payload in the first PPDU are determined based on at least one of a data rate type, the low-density parity-check coding, and a constraint length of convolutional code that are determined by the first UWB device.

11. A communication method, wherein the method is applied to a second ultra-wideband UWB device, and the method comprises:
sending first indication information to a first UWB device, wherein the first indication information indicates a device type of the second UWB device; and
receiving a first PPDU from the first UWB device, wherein a format of the first PPDU is determined based on a device type of the first UWB device and the type of the second UWB device.

12. The method according to claim 11, wherein the device type of the first UWB device or the device type of the second UWB device comprises at least one of the following: a ranging device, a sensing device, and a data transmission device.

13. The method according to claim 12, wherein the ranging device comprises a general ranging device and/or an advanced ranging device, wherein the general ranging device does not support a dynamic physical header and low-density parity-check coding, and the advanced ranging device supports the dynamic physical header and the low-density parity-check coding.

14. The method according to claim 12, wherein the sensing device comprises a general sensing device and/or an advanced sensing device, wherein the general sensing device does not support a dynamic physical header and low-density parity-check coding, and the advanced sensing device supports the dynamic physical header and the low-density parity-check coding.

15. The method according to claim 12, wherein the data transmission device comprises a general data transmission device and/or an advanced data transmission device, wherein the general data transmission device does not support a dynamic physical header and low-density parity-check coding, and the advanced data transmission device supports the dynamic physical header and the low-density parity-check coding.

16. A communication apparatus, comprising units or modules configured to implement the method according to any one of claims 1 to 15.

17. A communication apparatus, wherein the communication apparatus comprises at least one processor and a memory, wherein
the memory is configured to store a computer program or instructions, and the at least one processor is configured to execute the computer program or the instructions in the memory, so that the method according to any one of claims 1 to 15 is performed.

18. A communication system, wherein the communication system comprises a first ultra-wideband UWB device and a second UWB device, wherein
the first UWB device is configured to perform the method according to any one of claims 1 to 10; and
the second UWB device is configured to perform the method according to any one of claims 11 to 15.

19. A computer-readable storage medium, wherein the computer-readable storage medium stores computer instructions, and when the computer instructions are executed, a computer is enabled to perform the method according to any one of claims 1 to 15.

20. A computer program product, wherein the computer program product comprises computer program code, and when the computer program code is run by a computer, the computer is enabled to perform the method according to any one of claims 1 to 15.

21. A chip, wherein the chip comprises at least one processor and an interface, the processor is configured to read and execute instructions stored in a memory, and when the instructions are run, the chip is enabled to perform the method according to any one of claims 1 to 15.
